# EUROPEAN PATENT APPLICATION

(11) **EP 1 598 483 A2**
(43) Date of publication of application: **23.11.2005**
(21) Application number: 05010939.6
(22) Date of filing: 20.05.2005
(51) Int. Cl.: E02F 5/02

(54) **Procedure for moving objects burried fully or partially in the ground**

(30) Priority: 20.05.2004 ES 200401216
(71) Applicant: Passola Parcerissa, Gerard, 08700 Igualada - Barcelona (ES)
(72) Inventor: Passola Parcerissa, Gerard, 08700 Igualada - Barcelona (ES)
(74) Representative: Pons Arino, Angel

(57) **Abstract**

Procedure for moving objects (2) buried fully or partially in the ground of the type of those consisting of digging a trench (1) around the outside of the buried part of the object, in which the digging is done to at least a level below that of the foundation on which the object is resting or below a sufficient part of the buried part of the object to keep the object fully intact. At this level, some sections (4) are inserted crosswise into the trench (1), crossing through the ground underneath the object (2), comprising a suitably sturdy bearing structure (4). Some towropes (6) or belts for lifting or carrying the object are attached to some anchoring devices provided on said structure, placing the object at its desired resting place.

## Description

### OBJECT OF THE INVENTION

The present invention is related to a procedure for moving objects buried fully or partially in the ground.

### STATE OF THE ART PRIOR TO THE INVENTION

At present, if an object buried fully or partially in the ground, such as a tree, a statue or monument, is wised to be moved to a different location, digging is done around its roots or foundation and a towrope is attached to the part of the object which is not buried underground, pulling upward until the object is pulled out of the ground.

This way of going about this process often causes the object to break apart or, in the best of cases, endangers its remaining fully intact, given that traction is exerted upwards, and the object has to withstand part of the downward pull of its own dead weight as well as the pull exerted for pulling it out of the ground.

This drawback is remedied by means of the use of the procedure of the invention.

### DESCRIPTION OF THE INVENTION

The procedure of the invention comprises an optimum way of moving objects buried fully or partially in the ground, such as trees, statues and similar objects without their having to withstand the downward pull of their own weight or the traction exerted when pulling them out of the ground, thus minimizing the risk of the breaking, damaging or failure thereof.

According to the invention, the procedure is of the type of those in which a trench is dug around the outside of the part of the object buried underground (roots, foundation, etc.) and proposes carrying this digging process further up to the point of the trench being dug down below the foundation of the object or below a root ball far enough to keep the same intact when dealing with a plant species (tree).

Some sections, comprising a bearing frame capable of withstanding the weight of the object are then inserted crosswise through the trench, through the ground underneath the object.

Some towropes or belts or other lifting means which can be used for lifting the structure on which the object is resting by means of a crane or similar for the purpose of hauling it to its desired resting place are then attached to some anchoring devices provided on the structure previously fabricated.

Optionally, the object is placed at its desired resting place in an opening previously dug out in the ground for this purpose, which is then covered over by means of the corresponding earthwork for consolidating the placement of the object.

Except in the case in which this procedure is considered to be too costly and the impact thereof is not harmful to the environment or for any other reason, the sections comprising the structure are often recovered after placing the object at the desired resting place prior to covering over the opening dug in the ground, although this step is described as option in the patent because it may be omitted under certain conditions stated hereinabove.

### BRIEF DESCRIPTION OF THE DRAWINGS

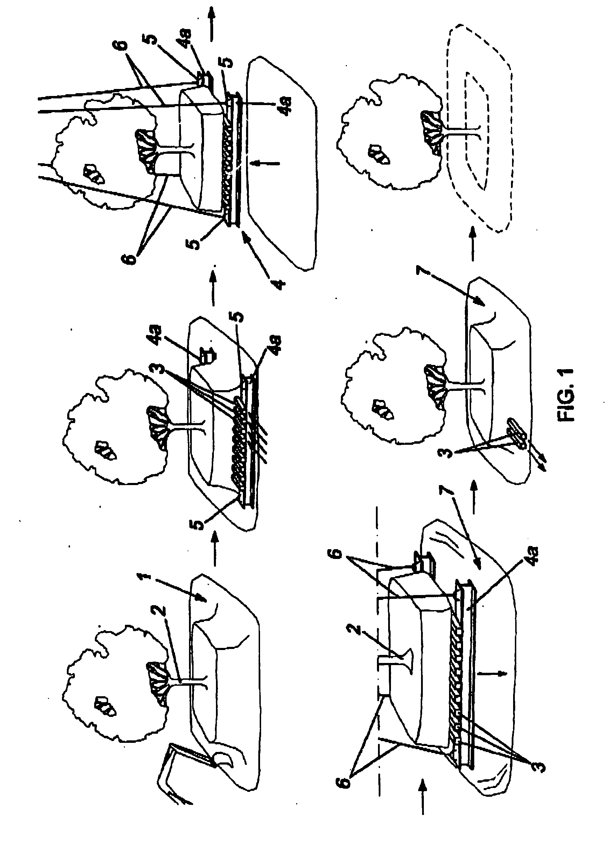

Fig. 1 provides a diagram of the procedure of the invention.

### DESCRIPTION OF ONE EMBODIMENT OF THE INVENTION

The procedure of the invention consists of the following stages:
- Digging a trench 2 in the ground surrounding the object to be transported, a tree 2 in this example of embodiment, the trench being dug down deep enough to reach a level below the roots, or down to a part of the root system making it possible to keep the tree fully intact.
- Inserting crosswise through the trench at this level, below the root ball formed at this depth, a number of sections comprising a bearing structure 4 sturdy enough to withstand the weight of the tree with the aid of hydraulic means, not shown, such as pistons. The structure, in this non-limiting example of the invention, is comprised of two beams 4a on which a number of tubular crossbars 3 are laid.
- Attaching some towlines 6 or other means of lifting and hauling to some anchoring devices provided on the beams for the purpose of lifting and transporting the object directly or by using auxiliary means, such as trucks, etc., not shown.
- Once the object has been placed in its new location, still incorporating the structure, towlines are use to place it in an opening 7 dug for this purpose.
- The sections comprising the structure 4 are then removed or recovered.
- Lastly, earthwork is done to cover over the opening in the ground and consolidate the securing of the object by burying the root ball of the tree.

## Claims

1. Procedure for moving objects buried fully or partially in the ground, of the type of those which consist of digging a trench around the outside of the part of the object buried, **characterized in that** the digging is done down to a level below the foundation of the object or far enough below the buried part of the object to keep the object fully intact, some sections being inserted at this level crossing through the ground underneath the object, comprising a suitably sturdy bearing structure, some towlines or belts for lifting and hauling the object being attached to some anchoring devices provided on said structure, the object being placed at its desired resting place.

2. Procedure according to Claim 1 **characterized in that** the object is optionally placed at the desired resting place and then covered over by means of earthmoving for consolidating the placement of the object.

3. Procedure according to Claim 1 **characterized in that** following the object being placed at its desired resting place, the sections comprising the structure are then optionally recovered.

4. Procedure according to Claim 1 **characterized in that** the sections comprising the structure are inserted into the ground with the aid of hydraulic means.
